# EUROPEAN PATENT APPLICATION

(11) **EP 2 425 919 A1**
(43) Date of publication of application: **07.03.2012**
(21) Application number: 10769585.0
(22) Date of filing: 30.03.2010
(51) Int. Cl.: B23D 47/00

(54) **CUTTING MACHINE**

(30) Priority: 27.04.2009 JP 2009107726
(71) Applicant: Makita Corporation, Anjo-shi, Aichi 446-8502 (JP)
(72) Inventor: KANI, Toshiyuki, Anjo-shi Aichi 446-8502 (JP); KIMURA, Yoshihiro, Anjo-shi Aichi 446-8502 (JP); SHIBATA, Yoshinori, Anjo-shi Aichi 446-8502 (JP)
(74) Representative: Kramer - Barske - Schmidtchen
(86) International application number: PCT/JP2010/055668
(87) International publication number: WO 2010/125886

(57) **Abstract**

In a cutting machine, such as a table-top circular saw having a table for placing thereon a workpiece, and a cutting machine body having a saw blade rotated by an electric motor, there may be caused a phenomenon in which a high frequency current generated in the vicinity of the electric motor is amplified on the side of the table to generate noises to the peripheral devices, and it is an object of the present invention to reduce such noises.

It is configured to attach an insulation member (16, 16) to a tilt support shaft (15) that vertically movably supports a cutting machine body (20) relative to the side of a body support section (50) constituted mainly by a table, so that conduction of the high frequency current is blocked.

## Description

### TECHNICAL FIELD

This invention relates to a cutting machine, such as a stationary-type circular saw including a table-top circular saw and a table saw, etc. or a portable circular saw.

### BACKGROUND ART

For example, a table-top circular saw has a table on which a workpiece to be cut is placed, and a cutting machine body supported on the upper side of the table so as to be operable to move vertically, and the cutting machine body has a circular cutting blade rotated by an electric motor as a drive source. The user can perform a cutting operation by downwardly moving the cutting machine body to bring the rotating cutting blade to cut into the workpiece to be cut. A technique relating this kind of circular saw is disclosed, for example, in a patent document mentioned below.
In general, in this kind of cutting machine, a table vertically movably supporting a cutting machine body having an electric motor, and members associated with the table are manufactured from metallic materials such as steel, etc., or non-ferrous metallic materials such as aluminum, etc. as their materials. On the other hand, it has been known that a minute high frequency current is generated mainly at a carbon brush or its peripheral portion of the electric motor.

### PRIOR ART DOCUMENTS

### PATENT DOCUMENTS

Patent Document 1: Japanese Laid-Open Patent Publication No. 2002-370201

### SUMMARY OF THE INVENTION

### PROBLEM TO BE SOLVED BY THE INVENTION

However, it may be considered that a high frequency current generated near the electric motor is conducted through the cutting machine body and metallic components on the side of the table supporting the cutting machine body and that this is amplified, for example, by a flat table that has a relatively large area, thereby generating noises that adversely affect to the other peripheral electronic devices. It is considered that this phenomenon occurs not only on the table-top circular saw but also on a portable cutting device in which a cutting machine body is tiltably supported on an upper surface side of a base for placing on a workpiece to be cut.
Thus, in the case of a cutting machine that is equipped with a cutting machine body having an electric motor as a drive source, and a body support section such as a table or a base supporting the cutting machine body, it is also necessary to certainly eliminate or reduce the aforementioned noises in light of the adverse affect to other peripheral electronic devices or the like.
Therefore, it is an object of the present invention to prevent a high frequency current generated on the side of a cutting machine body of this kind of cutting machine from being amplified or to make the high frequency current hard to be amplified on the side of a body support section, thereby reducing or eliminating generation of this kind of noises.

### MEANS FOR SOLVING THE PROBLEM

For this purpose, the present invention provides cutting machines configured as defined in the claims.
According to the cutting machine defined in claim 1, conduction between a metal component on the side of a cutting machine body and a metal component on the side of a body support section is blocked by an insulation member, and therefore, it is possible to reduce or avoid transmission of a high frequency current generated at a motor to the side of the body support section, where the high frequency current is amplified, and hence, generation of noises from the cutting machine on the whole can be reduced or avoided, whereby it is possible to eliminate an adverse affect to other peripheral electronic devices or the like.
According to the cutting machine defined in claim 2, the insulation member is interposed between two metal components on the side of the cutting machine body having the electric motor and on the side of the body support section supporting the cutting machine body, which components move relative to each other the cutting machine body moves, and therefore, a high frequency current generated at the motor is blocked on the side of the cutting machine body and may not be transmitted to the side of the body support section. For this reason, the high frequency current generated on the side of the cutting machine body may not be amplified on the side of the body support section that includes a flat table having a relatively large area for supporting a workpiece to be cut, and hence, generation of noises from the cutting machine on the whole can be reduced or eliminated, whereby it is possible to eliminate an adverse affect to other peripheral electronic devices.
According to the cutting machine defined in claim 3, a high frequency current generated at the electric motor can be prevented from conducting to the side of the body support section via a tilt support shaft that vertically tiltably supports the cutting machine body relative to the side of the body support section, and hence, it is possible to reduce or eliminate generation of noises.
With the cutting machine, for example, a table-top circular saw that has a table serving as the body support section for placing thereon a workpiece to be cut and is supported so as to be operable to tilt vertically relative to the table, the insulation member electrically insulates between the tilt support shaft tiltably supporting the cutting machine body and the cutting machine body or between the tilt support shaft and the side of the table, and therefore, a high frequency current generated at the electric motor is blocked by the insulation member and is not transmitted to the side of the table serving as the body support section via the tilt support shaft. For this reason, a high frequency current generated at the electric motor is not amplified or is hard to be amplified on the side of the table, and noises of the cutting machine can be substantially reduced or eliminated, whereby it is possible to avoid an adverse affect to other peripheral electronic devices.
According to the cutting machine defined in claim 4, it is possible to prevent a high frequency current generated at the electric motor from conducting to the side of the body support section via a torsion spring that biases the cutting machine body, for example, in an upwardly moving direction, and therefore, generation of noises can be reduced or eliminated.
With the cutting machine, for example, a table-top circular saw that has a table serving as the body support section for placing thereon a workpiece to be cut and is supported so as to be operable to tilt vertically relative to the table, in the case that the torsion spring is interposed for biasing the cutting machine body toward the upwardly moving side, one end side of the torsion spring is engaged with the side of the cutting machine body and the other end side of the same is engaged with the side of the body support section, so that they contact the side of the cutting machine body and the side of the body support section, respectively. However, because the insulation member is interposed between at least one of the one end side and the other end side of the torsion spring and the side of the cutting machine body or the side of the body support section, conduction between the cutting machine body and the body support section via the torsion spring is blocked. Therefore, a high frequency current generated at the electric motor may not be amplified on the side of the body support section via the torsion spring, and in this respect, noises of the cutting machine can be reduced or eliminated.
According to the cutting machine defined in claim 5, a high frequency current generated at the electric motor can be prevented from being conducted to the side of the body support section via a link lever used for opening and closing a cover, and therefore, generation of noises can be reduced or eliminated.
For example, in the case that the cutting machine body is configured to have the cover for opening and closing a cutting blade and to have the link lever interposed between the cover and the body support section for opening and closing the cover in conjunction with the vertical movement of the cutting machine body, the insulation member is interposingly disposed on at least one of a connecting portion of the link lever to the cover and eventually to the cutting machine body and a connecting portion connecting the link lever to the side of the body support section, so that conduction between the cutting machine body and the body support section via the link lever is blocked. For this reason, a high frequency current generated at the electric motor may not be amplified on the side of the body support section via the link lever, and in this respect, noises of the cutting machine can be reduced or eliminated.

### BRIEF DESCRIPTION OF THE DRAWINGS

[Fig. 1] A side view of an entire cutting machine according to an embodiment of the present invention.
[Fig. 2] A plan view of a support portion for a body support section of a cutting machine body. This figure shows in a horizontal section a portion treated with a first noise control measure.
[Fig. 3] A vertical sectional view of the support portion for the body support section of the cutting machine body. This figure shows a portion treated with a second noise control measure.
[Fig. 4] A partial sectional view as viewed in a direction indicated by line (IV)-(IV) in Fig. 1 and showing a view as viewed from a front side of a support portion on the side of the body support section of a link lever used for opening and closing a movable cover. This figure shows a portion treated with a third noise control measure.

### MODE FOR CARRYING OUT THE INVENTION

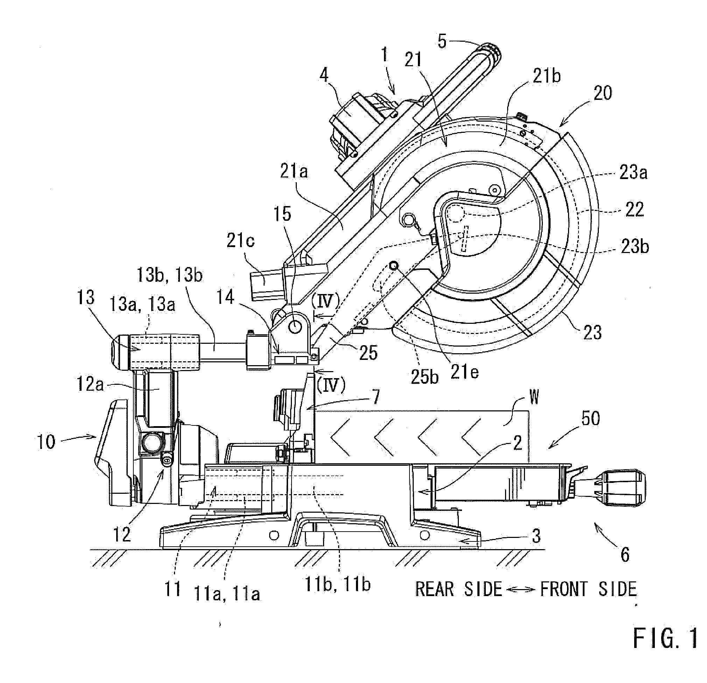

Next, an embodiment of the present invention will be described with reference to Figs. 1 through 4. Fig. 1 is a view as a whole of a cutting machine 1 according to the embodiment. As shown in the figure, in the embodiment, a slide circular saw that is a table-top cutting device, in which a cutting machine body 20 can be slid in forward and rearward directions, is exemplified as an example of the cutting machine 1. In Fig. 1, the user is positioned on the right side of the cutting machine 1. In the following explanation, the side of the user (right side in Fig. 1) will be referred to as a front side, and the side away from the user (left side in Fig. 1) will be referred to as a rear side. Left and right sides shall be determined with reference to the user. In a normal cutting operation, a cut process proceeds as the user moves the cutting machine body 20 from the front side toward the rear side. Therefore, in the following explanation, the direction toward the rear side will be also referred to as a cut proceeding direction.
This cutting machine 1 is generally divided into the cutting machine body 20 and a body support section 50 supporting it. Firstly, the body support section 50 is provided with a table 2 for placing thereon a workpiece W to be cut, a base 3 horizontally rotatably supporting the table 2, and a body support arm portion 10 for supporting the cutting machine body 20 on the table 2. The table 2 is supported on the upper surface of the base 3 so as to be horizontally rotatable. A positioning mechanism 6 is provided at the front portion of the table 2 for positioning and fixing the rotational position of the table 2 relative to the base 3 at a given angular position.
On the upper surface side of the table 2, a positioning fence 7 is provided for positioning the workpiece W to be cut with respect to a table surface direction. The positioning fence 7 is supported on the side of the base 3 to extend in the left and right direction above the table 2, and a small clearance is provided between its lower end portion and the upper surface of the table 2 to permit rotation of the table 2.

Next, the body support arm portion 10 is provided on the rear portion of the table 2. This body support arm portion 10 supports the cutting machine body 20 such that the cutting machine body 20 can slide in the horizontal direction (the forward and rearward direction as viewed from the user, the left and right direction in Fig. 1), tilt leftward and rightward (the direction perpendicular to the sheet surface in Fig. 1) and tilt vertically; the body support arm portion 10 is provided with a lower slide mechanism 11, a leftward and rightward tilt mechanism 12, an upper slide mechanism 13 and a vertically tilt mechanism 14.
The lower slide mechanism 11 is constituted mainly by bearings lea mounted to the side of the rear portion of the table 2, and a pair of left and right slide bars 11 b supported by the bearings 11 a so as to be slidable in axial directions along the lower surface of the table 2; the leftward and rightward tilt mechanism 12 is mounted to the rear end portions of both slide bars 11b. With this leftward and rightward tilt mechanism 12, the cutting machine body 20 can be tilted leftward and rightward as viewed from the user, so that it is possible to perform a so-called bevel cutting operation. By fixing the leftward and rightward tilt mechanism 12 in a right angle position, it is possible to perform a so-called right-angle cutting operation.
The upper slide mechanism 13 is mounted to the upper portion of a tilt arm 12a of the leftward and rightward tilt mechanism 12. Also, the upper slide mechanism 13 is constituted mainly by bearings 13a and a pair of left and right slide bars 13b, and the sliding directions of the upper and lower slide mechanism 11 and 13 are set to be parallel to each other.
The vertically tilt mechanism 14 is provided on the front portion of the upper slide mechanism 13. The cutting machine body 20 is supported so as to be tiltable vertically via a tilt support shaft 15 of the vertically tilt mechanism 14.
The cutting machine body 20 has a body case 21, and a support arm portion 21 a of the body case 21 is supported by the vertically tilt mechanism 14 via the tilt support shaft 15 so as to be tiltable vertically. In addition to the support arm portion 21a, the body case 21 has a fixed cover portion 21b. The fixed cover portion 21b covers a circular cutting blade 22a over a range of substantially upper half of its circumference.
A discharge outlet 21c is provided on the upper portion of the support arm portion 21a for discharging cutting powder blown up into the fixed cover portion 21b as a result of the cutting process. Although not shown in the drawings, a dust collecting bag may be attached to the discharge outlet 21c or a dust hose of a dust collecting device may be connected to the same.

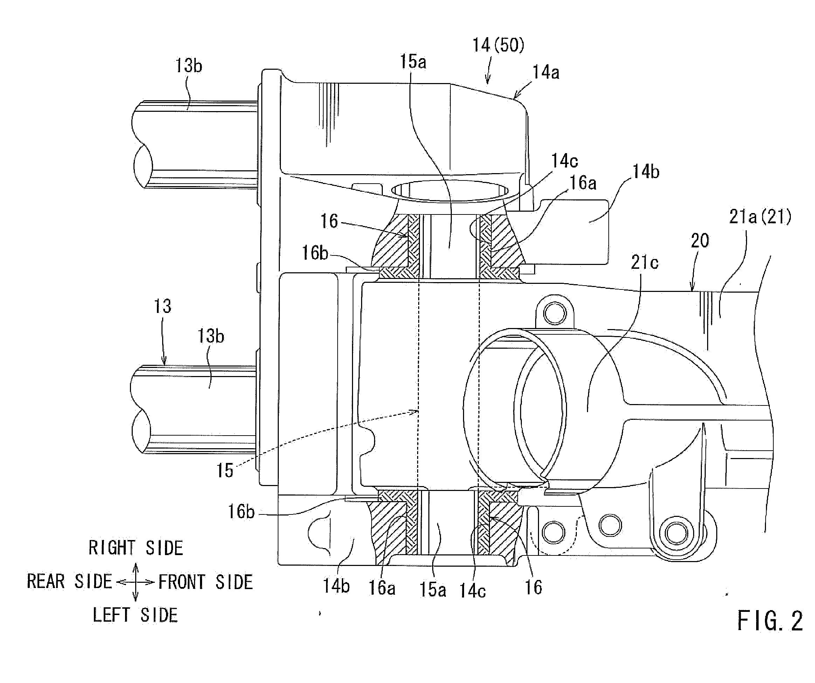

An openable and closable movable cover 23 covers the cutting blade 22 over a range of substantially lower half of its circumference. This movable cover 23 is supported by the fixed cover portion 21b via a support shaft 23a so as to be vertically pivotable. And, the movable cover 23 is linked to the vertically tilt mechanism 14 on the side of the body support section 50 via a link lever 25. Therefore, the movable cover 23 rotates counterclockwise in Fig. 1 so as to be opened as the cutting machine body 20 moves downward, and the movable cover 23 rotates clockwise so as to be closed as the cutting machine body 20 moves upward. As the movable cover 23 is opened, the lower side of the cutting blade 22 is exposed, and this exposed part cuts into the workpiece W to be cut. When the movable cover 23 is closed due to the upward movement of the cutting machine body 20, the cutting blade 22 is brought into a state of being substantially completely closed by the fixed cover portion 21b and the movable cover 23. Fig. 1 shows a state where the cutting machine body 20 has returned to an upper moving end and the movable cover 23 has been completely closed.
An electric motor 4 as a drive source is mounted to the back surface side (right side surface as viewed in Fig. 2) of the fixed cover portion 21b. This electric motor 4 is mounted to the back surface side of the body case 21. The circular cutting blade 22 is rotated by the electric motor 4 serving as a drive source.
A handle portion 5 to be grasped by the user is provided on the back surface side of the body case 21. This handle portion 5 has a shape of a horizontal loop and has a switch lever (not shown) disposed on its inner circumferential side. When the user operates to pull the switch lever with his or her fingertip, the electric motor 4 starts to rotate the cutting blade 22.

The cutting machine 1 according to the present embodiment is characterized significantly in that it has a construction for reducing or eliminating such an event that a high frequency current generated mainly in the vicinity of a carbon brush of the electric motor 4 is amplified on the side of the body support section 50 to generate electromagnetic noises. In the present embodiment, noise control measures are implemented at three locations of the cutting machine 1.
A first noise control measure is implemented at a tilt support region of the cutting machine body 20 with respect to the vertically tilt mechanism 14. This first noise control measure is shown in Fig. 2. The vertically tilt mechanism 14 has a tilt bracket 14a. This tilt bracket 14a is mounted between the front ends of the slide bars 13b of the upper slide mechanism 13. The tilt bracket 14a is provided with two support wall portions 14b. The tilt support shaft 15 is mounted so as to extend between these two support wall portions 14b.
The tilt support shaft 15 is made of metal and has an adequate strength and wear resistance. This tilt support shaft 15 extends through the support arm portion 21a in the left and right direction and has opposite end portions protruding laterally from the lateral portions of the support arm portion 21 a, respectively. These left and right protruding end portions 15a are rotatably supported within support holes 14c of the support wall portions 14b, respectively. First insulation members 16 are mounted to the protruding end portions 15a of the tilt support shaft 15, respectively. The protruding end portions 15a are supported within the support holes 14c via the first insulation members 16, respectively. Each of the insulation members 16 is integrally formed of nonmetallic material that is electrically nonconductive, and in this example, each insulation member is manufactured by an integral molding process of synthetic resin. Each of the insulation members 16 is provided with a cylindrical portion 16a and a flange portion 16b formed integrally with one end of the cylindrical portion 16a. The protruding end portion 15a of the tilt support shaft 15 is rotatably inserted into the inner circumferential side of the cylindrical portion 16a. The cylindrical portion 16a is inserted into the support hole 14c of the support wall portion 14b. The flange portion 16b is interposed between the support arm portion 21a of the body case 21 and the support wall portion 14b in a state of allowing the vertically tilting movement of the body case 21a.
With the left and right first insulation members 16, the end portions 15a of the tilt support shaft 15 are prevented from directly contacting with the support holes 14c of the support wall portions 14b, and the support arm portion 21a and the left and right support wall portions 14b are prevented from directly contacting with each other, and therefore, between the end portions 15a of the tilt support shaft 15 and the support holes 14c of the support wall portions 14b and between the body case 21 and the left and right support wall portions 14b, no direct contact between metallic components occurs, so that an electrically complete block (insulation) is provided. Therefore, a high frequency current generated at the electric motor 4 is prevented from being transmitted to the side of the body support section 50 via the tilt support shaft 15.

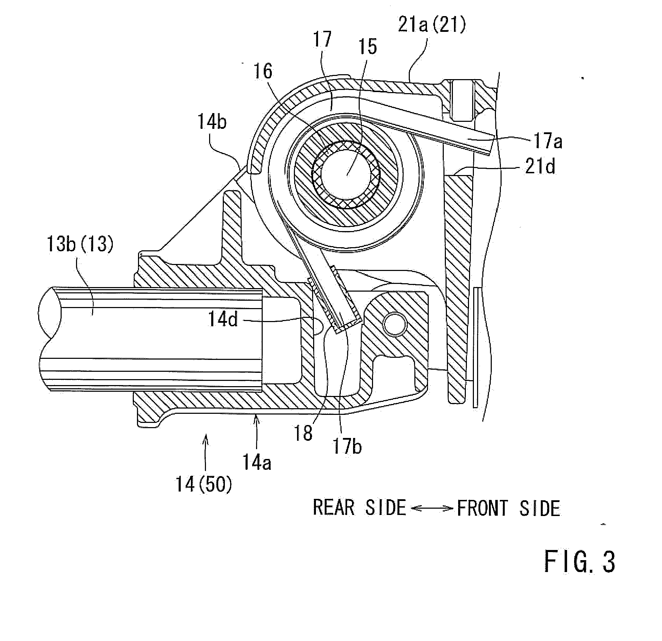

Fig. 3 shows a second noise control measure. Also, the second noise control measure is implemented at the tilt support region of the cutting machine body 20 with respect to the vertically tilt mechanism 14. As shown in Fig. 3, a metallic torsion spring 17 is interposingly disposed around the tilt support shaft 15. One end portion 17a of the torsion spring 17 is hooked into an engaging hole 21d of the body case 21a. The other end portion 17b of the torsion spring 17 is hooked into an engaging hole 14d of the tilt bracket 14a. A second insulating member 18 is attached to the other end portion 17b of the torsion spring 17. This second insulation member 18 is attached in a state of covering the other end portion 17b. The other end portion 17b of the torsion spring 17 is hooked into the engaging hole 14d with an intervention of the second insulation member 18. Therefore, between the other end portion 17b of the torsion spring 17 and the engaging hole 14d of the tilt bracket 14a, there exists no direct contact between metallic components, so that an electrical insulation is provided. Therefore, a high frequency current generated at the electric motor 4 is prevented from being transmitted to the side of the body support section 50 via the torsion spring 17.

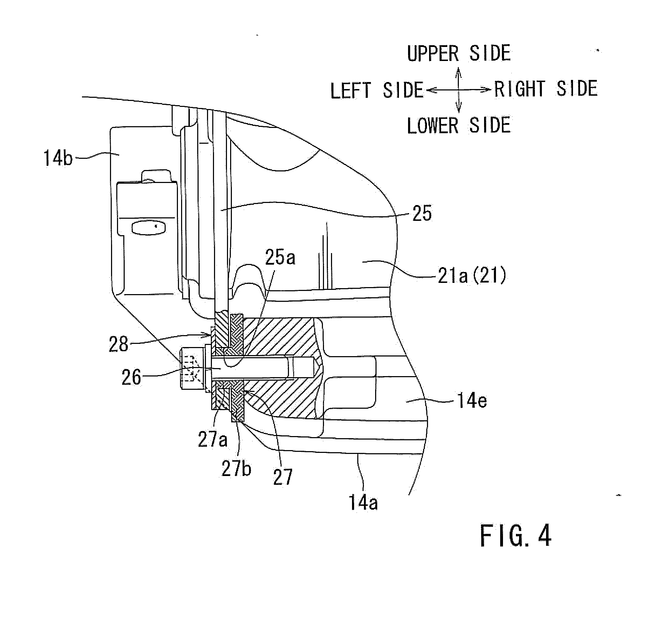

Fig. 4 shows a third noise control measure. The third noise control measure is implemented at the link lever 25 that causes the movable cover 23 to be opened and closed in conjunction with the vertical movement of the cutting machine body 20. Also, the link lever 25 is made of metal and is interposed between the side of the cutting machine body 20 and the side of the body support section 50, or between the support arm portion 21a and the tilt bracket 14a of the vertically tilt mechanism 14, each of which is made of metal.
One end side of the link lever 25 is supported by a support base portion 14e of the tilt bracket 14 via a support shaft 26 so as to be vertically tiltable. In addition, the one end side of the link lever 25 is supported by a lateral portion of the support base portion 14e via third and fourth insulation members 27 and 28. The third insulation member 27 is made of a nonmetallic material that is electrically nonconductive, and in this example, it is manufactured by an integral molding process of synthetic resin. The support shaft 26 is inserted into the inner circumferential side of the third insulation member 27. The third insulation member 27 has a cylindrical portion 27a and a flange portion 27b. The cylindrical portion 27a is inserted into a support hole 25a of the link lever 25. The flange portion 27b is held between the link lever 25 and a lateral surface of the support base portion 14e of the tilt bracket 14a.
As shown in the figure, in this embodiment, a screw (a cap screw with a hexagon hole) is used as the support shaft 26. The fourth insulation member 28 is held between the head of the support shaft 26 and the link lever 25. A nonmetallic component having a flat-plate shape is used as the fourth insulation member 28. In this example, a flat plate made of synthetic resin is used as the insulation member 28. The fourth insulation member 28 blocks conduction between the link lever 25 and the support shaft 26.

In this way, the link lever 25 is insulated from both of the support shaft 26 and the support base portion 14e by the third and fourth insulation members 27 and 28. Therefore, a high frequency current generated at the electric motor 4 is prevented from flowing from the side of the cutting machine body 20 toward the body support section 50 via the link lever 25.
As shown in Fig. 1, the other end side (front end side with respect to the tilting movement) of the link lever 25 extends to a position proximal to the rotation center (support shaft 23a) of the movable cover 23. An actuation plate portion 23b is provided integrally with the movable cover 23 at a position proximal to the rotation center. The other end portion of the link lever 25 is in abutment to the actuation plate portion 23b. In addition, at the central portion in the longitudinal direction of the link lever 25, there is formed an actuation hole 25b elongated in the longitudinal direction and having a slightly curved arc shape. An actuation shaft 21e provided on the body case 21 is inserted into the actuation hole 25b. As the support shaft 25 and the actuation shaft 21e move relative to each other with the downward movement of the cutting machine body 20, the other end portion of the link lever 25 moves counterclockwise in Fig. 1 along an arc around the support shaft 23a, so that the actuation plate portion 23b is pushed to open the movable cover 23. The movable cover 23 is biased in the closing direction by a tension spring that is not shown. The movable cover 23 is opened as the link lever 25 moves against the biasing force of the tension spring; as the link lever 25 retracts by the upward movement of the cutting machine body 20, the movable cover 23 is closed by the biasing force of the tension spring and by the weight of itself.

According to the cutting machine of the present embodiment described above, the first to fourth insulation members 16, 18, 27 and 28 electrically block between the cutting machine body 20 and the body support section 50 supporting the cutting machine body. Therefore, a high frequency current generated mainly in the vicinity of the carbon brush of the electric motor 4 may not be conducted to the side of the body support section 50, hence it is possible to avoid such a phenomenon that the high frequency current is amplified, for example, at the table 2, on the side of the body support section 50, whereby it is possible to reduce or eliminate generation of electromagnetic noises from the cutting machine 1.
In addition, it is not configured to manufacture the body case 21 or the tilt support shaft 15 itself by using a nonmetallic material but is configured to provide insulation over a minimum range at necessary locations, and therefore, it is possible to achieve the aimed object at a lower cost while ensuring rigidity needed for the cutting machine. Further, since it is configured to attach small components (first to fourth insulation members 16, 18, 27 and 28) over a requisite minimum range, post-attachment can be easily performed, and it is possible to apply to a wide range of kinds of machines.

The embodiment described above can be modified in various ways. For example, although the construction was exemplified in which each of the first to fourth insulation members 16, 18, 27 and 28 is manufactured by using synthetic resin as its material, it is also possible to manufacture each of the insulation members by using an electrically nonconductive material (nonmetallic material), such as wood, paper, rubber, plant, stone, etc. as its material.
In addition, in the exemplified construction, the insulation members are attached to the tilt support shaft 15 vertically tiltably supporting the cutting machine body 20 relative to the body support section 50, the torsion spring 17 biasing the cutting machine body 20 toward the side of upward movement, and the support shaft 26 supporting the link lever 25 on the side of the body support section 50, however, the insulation members may be attached to the other member or members, i.e., either one or both of the component on the side of the cutting machine body 20 and the component on the side of the body support section 50 which move relative to each other with the vertical movement of the cutting machine body 20.
Further, in the exemplified construction, the upper and lower two stage slide mechanisms 11 and 13 and the left and right tilt mechanism 12 are provided, however, it is possible to apply in a similar manner to cutting machines that do not have these mechanisms.
Furthermore, although the table-top circular saw (slide circular saw) has been exemplified as the cutting machine 1, it is possible to apply in a similar manner to the other types of cutting machines having cutting blades rotating by electric motors, such as a portable cutting machine and a stationary table saw. In the case of a portable cutting machine, a cutting machine body is supported on the upper surface of a base to be placed on a workpiece to be cut; in particular in the case of that having a function of moving the cutting machine body relative to the base as a cutting depth is adjusted or a function of causing relative movement of the cutting machine body for performing a bevel cutting operation, a nonmetallic insulation member may be interposed at a portion tiltably supporting the cutting machine body relative to the base for blocking conduction between the side of the cutting machine body and the side of the body support section (base), whereby it is possible to eliminate a phenomenon in which a high frequency current generated in the vicinity of the electric motor is amplified on the side of the base, so that it is possible to reduce or avoid generation of noises.

## Claims

1. A cutting machine comprising an electric motor as a drive source, a cutting machine body having a cutting blade rotated by the electric motor, and a body support section supporting the cutting machine body with respect to a workpiece to be cut;
wherein an insulation member is interposed between a metallic component on the side of the cutting machine body and a metallic component on the side of the body support section.

2. The cutting machine as in claim 1, wherein the insulation member is interposed between the metallic component on the side of the cutting machine body and the metallic component on the side of the body support section, which move relative to each other as the cutting machine body moves relative to the body support section.

3. The cutting machine as in claim 1 or 2, wherein the cutting machine body is tiltably supported by the body support section via a tilt support shaft, and the insulation member is interposed between the tilt support shaft and the cutting machine body and/or the body support section.

4. The cutting machine as in claim 1 or 2, wherein the cutting machine body is tiltably supported by the body support section via a tilt support shaft and is spring-biased in one of tilting directions by a torsion spring, and the insulation member is interposed between an end portion of the torsion spring and the cutting machine body and/or the body support section.

5. The cutting machine as in claim 1 or 2, wherein the cutting machine body is tiltably supported by the body support section via a tilt support shaft, a link lever is interposed between the cutting machine body and the body support section for opening and closing a cover of the cutting blade in conjunction with a tilting movement of the cutting machine body, and the insulation member is interposed between the link lever and the cutting machine body and/or the body support section.
